# EUROPEAN PATENT APPLICATION

(11) **EP 1 998 283 A1**
(43) Date of publication of application: **03.12.2008**
(21) Application number: 06729808.3
(22) Date of filing: 23.03.2006
(51) Int. Cl.: G06T 1/00

(54) **INFORMATION PRESENTING APPARATUS AND INFORMATION PRESENTING TERMINAL**

(71) Applicant: Olympus Corporation, Tokyo 151-0072 (JP)
(72) Inventor: SHIBASAKI, Takao., c/o Intellectual Property Support Dept., Hachioji-shi, Tokyo 192-8512 (JP); FURUHASHI, Yukihito, c/o Intellectual Property Support Dep., Hachioji-shi, Tokyo 192-8512 (JP); SAITO, Akito, c/o Intellectual Property Support Dep, Hachioji-shi, Tokyo 192-8512 (JP); AKATSUKA, Yuichiro, c/o Intellectual Property Support Dept, Hachioji-shi, Tokyo 192-8512 (JP)
(74) Representative: von Hellfeld, Axel
(86) International application number: PCT/JP2006/305860
(87) International publication number: WO 2007/108128

(57) **Abstract**

An information presenting device is constituted by a recognizing and identifying unit (12) for recognizing and identifying each marker within a photographing range of a photographing unit (11) from an image photographed by the photographing unit (11), an information designating unit (13) for designating information in accordance with information on each marker identified by the identifying unit (12), and a presentation image generating unit (14) for generating a presentation image in which the information designated by the information designating unit (13) is associated with the image photographed by the photographing unit (11), and the information on each marker that is to be identified by the identifying unit (12) is supplied in a data file set (21) separately from the information presenting device (10).

## Description

### Technical Field

The present invention relates to an information presenting device and an information presenting terminal for presenting information.

### Background Art

Conventionally, various systems have been suggested for recognizing a photographed target image (marker image) and thereby presenting information in relation to the target image.

For instance, Jpn. Pat. Appln. KOKAI Publication No. 2003-244488 shows an image information adding system comprising an image information adding device, a marker means, and an information storing means. The image information adding means includes an optical information means and a calculation means. The optical information means obtains the angle of view, based on the focal length of the photographing timing and the image cutout size that are found out from the information of the image inputting unit. The calculation means calculates the position of the photographer and the photographing direction based on the obtained angle of view. Further, the marker means includes a pair of patterns. The information storing means stores a background image of the same direction as the direction of photographing the marker means and association information associated therewith. Such an image information adding system first calculates the position of the photographer and the photographing direction, based on a pair of photographed images of patterns. Based on the results, the system executes a process on the background image information obtained from the information storing means to obtain background image information of the same field of view, and also obtains association information. Then, the system displays the background image of the same field of view and the association information.

In addition, Jpn. Pat. Appln. KOKAI Publication No. 2003-15980 shows a technology of searching for a URL corresponding to a photographed logo on a server. More specifically, according to this technology, a logo contained in an advertisement printed on a magazine or the like is first photographed by a portable device. Next, the photographed logo is sent to a search server over the Internet. The search server searches for a logo the most analogous to the logo sent over the Internet. Then, the search server sends the URL corresponding to the found out logo back to the portable device over the Internet. By making an access by way of the URL, its homepage can be browsed on the portable device.

According to the technologies of Jpn. Pat. Appln. KOKAI Publication Nos. 2003-244488 and 2003-15980 both, reference information of target images is stored in the information presenting device. However, neither technology deals with the reference information as a dataset. Thus, the information presenting device cannot cope with the recognized subject in a wide range. Nor can the information presenting device easily exchange the corresponding reference information.

### Disclosure of Invention

The present invention has been conceived in light of the above. The purpose of the invention is to provide an information presenting device and an information presenting terminal which can cope with a recognition subject of the information presenting device in a wide range and readily exchange the corresponding reference information.

An aspect of the information presenting device of the invention is characterized by comprising:
an identifying unit for recognizing and identifying each marker within a photographing range of a photographing unit from an image photographed by the photographing unit;
a designating unit for designating information in accordance with information on the each marker identified by the identifying unit; and
a presentation image generating unit for generating a presentation image in which the information designated by the designating unit is associated with the image photographed by the photographing unit,
wherein the information on the each marker that is to be identified by the identifying unit is supplied in a data file set separately from the device.

Moreover, an aspect of the information presenting terminal of the invention is the information presenting terminal, comprising a photographing unit having a predetermined photographing range, an information presenting device, a storing device, and a displaying unit,
characterized in that the information presenting device comprises:
an identifying unit for recognizing and identifying each marker within a photographing range of a photographing unit from an image photographed by the photographing unit;
a designating unit for designating information in accordance with information on the each marker identified by the identifying unit; and
a presentation image generating unit for generating a presentation image in which the information designated by the designating unit is associated with the image photographed by the photographing unit, and displaying the presentation image on the displaying unit,
wherein reference information on the each marker that is to be identified by the identifying unit is supplied from the storing device in a data file set separately from the information presenting device.

### Brief Description of Drawings

FIG. 1 is a diagram showing a structure of an information presenting system in which an information presenting device according to the first embodiment of the present invention is incorporated.
FIG. 2 is a diagram for a flowchart of the operation of the information presenting device according to the first embodiment.
FIG. 3 is a diagram showing a structure of the information presenting system in which a modification example of the information presenting device according to the first embodiment is incorporated.
FIG. 4 is a diagram showing a structure of an information presenting system in which an information presenting device according to the second embodiment of the present invention is incorporated.
FIG. 5 is a diagram explaining a modification example of the information presenting device according to the second embodiment.
FIG. 6 is a diagram showing an information presenting system in which another modification example of the information presenting device according to the second embodiment is incorporated.
FIG. 7 is a diagram for a flowchart of the operation of a cellular phone in which the structure of FIG. 6 is incorporated.
FIG. 8 is a diagram showing a modification example of the structure of the information presenting system in which the information presenting device according to the first embodiment is incorporated.

### Best Mode for Carrying Out the Invention

The information presenting device recognizes a predetermined marker, which is a target image, from an image captured by a photographing unit such as a camera, and compares and identifies the target image with reference image (hereinafter, referred to as template) for recognition and verification that is separately loaded in advance into the system, thereby obtaining information (in various forms such as a text, graphics and movie) corresponding to the predetermined marker. The present invention has been conceived to improve the convenience of such an information presenting device.

In a conventional information presenting device of this type, the process is executed after a template that corresponds to the marker is read in advance at a predetermined position of an application software program. However, a situation of dealing with a large number of markers is not assumed here but only experimentally designed. Thus, this is not suitable for practical use. In other words, the usefulness of the information presenting device is enhanced only when the device maintains a large set of templates that serves as a dictionary which can be referred to when recognizing a marker. On the other hand, if the device contains too many templates therein (as many as 10000 templates, for example), it requires extremely long time to compare and identify (perform matching) the marker in the obtained image with the templates. The inventors of the present invention have conducted experiences and evaluations to find that the number of data items that are referred to should be limited to be between 100 and 1000 to reach the optimal convenience of the user and the optimal processing speed. It should be understood that the processing speed and display speed depends on the platform in which an application software program of the information presenting device is installed. Major platforms that are considered as being applicable to the present invention include a cellular cameraphone, a Personal Digital Assistant (PDA) equipped with a camera, and a portable personal computer (such as a notebook PC and a tablet PC). As described above, the inventors have improved the convenience in the user's practical use by grouping the templates by a certain number and dealing with them as datasets, and also by suggesting a system as explained below. In particular, the datasets are stored outside the application software program of the information presenting device, and read in a collective manner at the startup of the information presenting device or during the operation thereof. This has realized a structure in which data that is to be referred to can be introduced at the time of recognizing a marker.

The best mode for carrying out the present invention will be explained below with reference to the drawings.

### [Embodiment 1]

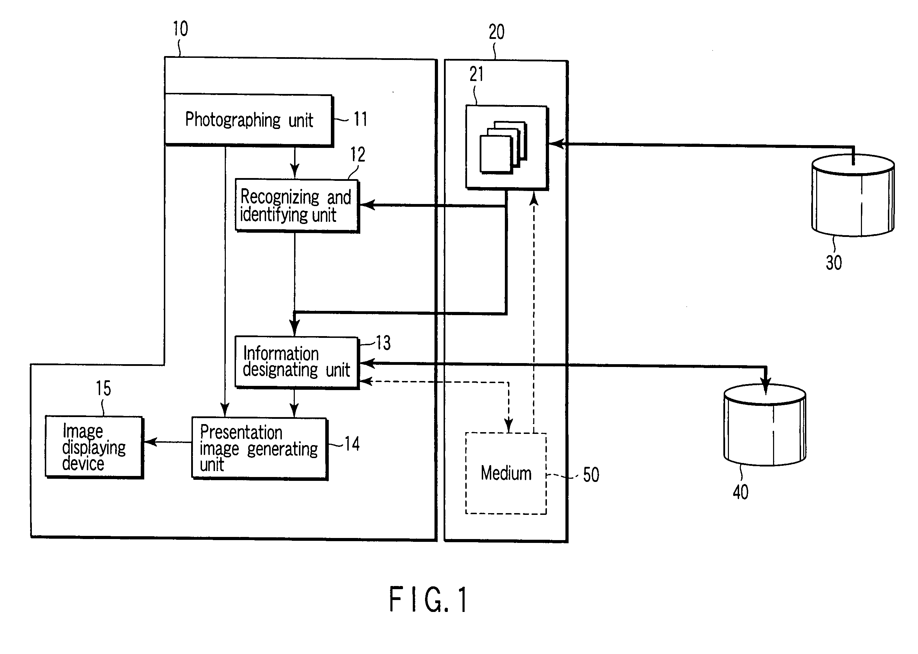

FIG. 1 is a diagram showing a structure of an information presenting system in which an information presenting device according to the first embodiment of the present invention is incorporated.

The information presenting system comprising an information presenting device 10, which is an information presenting terminal according to the first embodiment of the present invention, a storing unit 20, a dataset server 30, and an information server 40. The information presenting device 10 is constituted in the hardware platform. The storing unit 20 is arranged in this platform. The data server 30 and the information server 40 are designed as sites accessible from the platform hardware.

The information presenting device 10 comprises a photographing unit 11, a recognizing and identifying unit 12, an information designating unit 13, a presentation image generating unit 14, and an image displaying device 15. The recognizing and identifying unit 12, the information designating unit 13, and the presentation image generating unit 14 are implemented by the application software of the information presenting device in the hardware platform.

The photographing unit 11 and the image displaying device 15 may be included in the hardware platform as its structural components or may be externally connected. The recognizing and identifying unit 12, the information designating unit 13, and the presentation image generating unit 14 could be defined as an information presenting device. However in this embodiment, the device is considered as a unit that performs processes from image taking to final image presenting. Thus, the information presenting device is defined as including all of the photographing unit 11, the recognizing and identifying unit 12, the information designating unit 13, the presentation image generating unit 14, and the image displaying device 15.

The photographing unit 11 is a camera or the like having a predetermined photographing range. The recognizing and identifying unit 12 is configured to recognize and identify individual markers in the photographing range from an image photographed by the photographing unit 11. The information designating unit 13 acquires specific information (display content) from the information server 40 in accordance with the individual markers identified by the recognizing and identifying unit 12. Then, the information designating unit 13 designates the specific information as association information. The presentation image generating unit 14 generates a presentation image in which the association information designated by the information designating unit 13 is associated with the image photographed by the photographing unit. The image displaying device 15 is a display such as a liquid crystal display for displaying the presentation image generated by the presentation image generating unit 14.

The storing unit 20 in the platform stores a dataset 21 loaded from the dataset server 30 by way of a not shown communication unit or recording medium. The dataset 21 can be installed (downloaded or media-converted) and stored before or after the startup of the information presenting device 10.

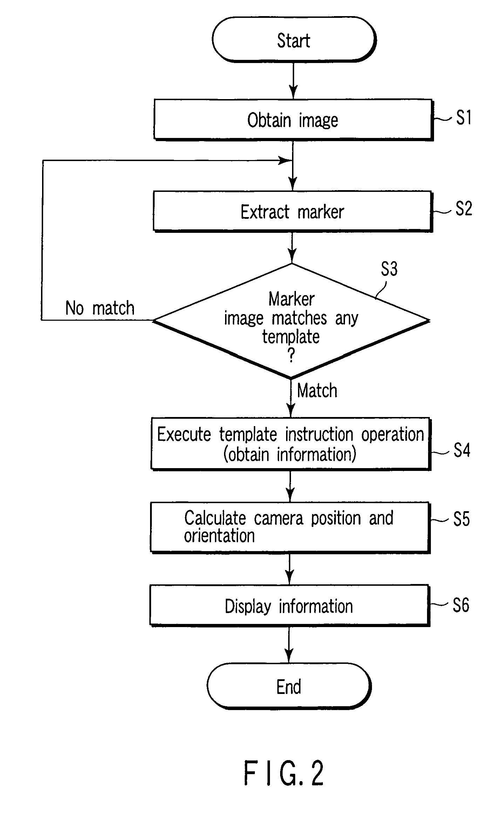

In such a structure, the information presenting device 10 obtains an image by use of the photographing unit 11, as indicated in FIG. 2 (STEP S1). Next, the recognizing and identifying unit 12 extracts a predetermined marker such as a square frame from the image obtained at STEP S1 (STEP S2). Thereafter, the recognizing and identifying unit 12 performs comparison and identification of the marker image (an image inside the square frame, for instance) extracted at STEP S2, based on the reference data of the dataset 21 read from the storing unit 20 of the platform. In this manner, the recognizing and identifying unit 12 detects a maker image that matches. When the recognizing and identifying unit 12 finds a matching marker image (STEP S3), at the next step, the information designating unit 13 reads information as to where the information that should be obtained is located and/or how the information can be obtained, from the corresponding data of the dataset 21 (STEP S4). In general, an access is made from the platform to the information server 40 which is provided externally on a network or the like by establishing communication. Then, the presentation image generating unit 14 processes the information (not shown) obtained by the information designating unit 13 in such a manner that it can be displayed in the platform or the image displaying device 15 that is externally provided, so as to generate a presentation image. The generated presentation image is transmitted from the presentation image generating unit 14 to the image displaying device 15 so as to be displayed on the image displaying device 15 (STEP S6). In some situations, the information may be effectively presented by generating a presentation image in which the obtained information is superimposed on the original image obtained by the photographing unit 11 and transmitting the presentation image to the image displaying device 15. Thus, a presentation method can be chosen by the user.

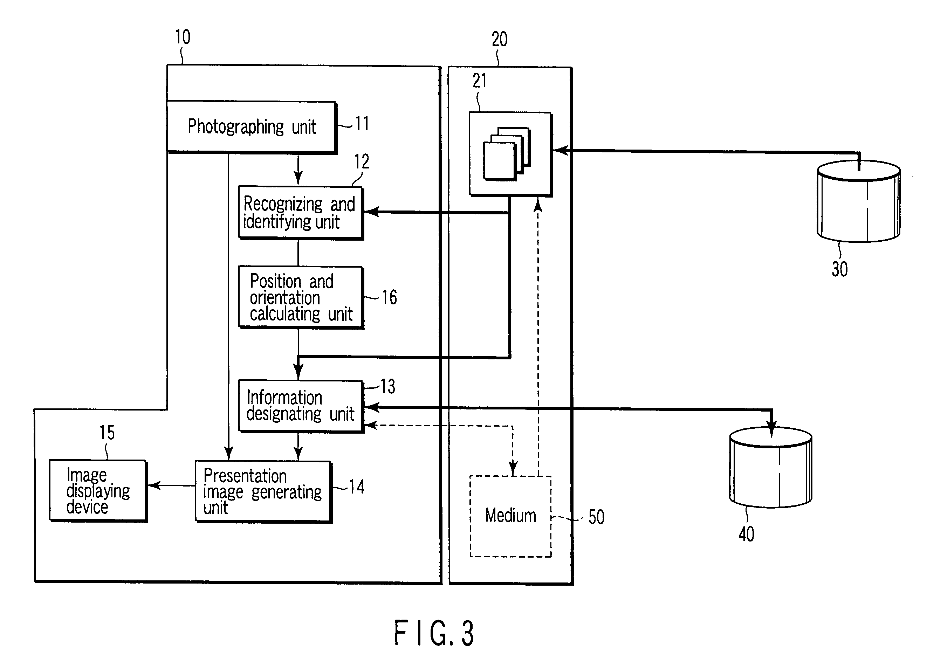

Moreover, a position and orientation calculating unit 16 may be arranged between the recognizing and identifying unit 12 and the information designating unit 13, as illustrated in FIG. 3. The position and orientation calculating unit 16 determines the positional and orientation relationship of the photographing unit 11 itself and the target marker by calculating back from the inclination and field angle of each marker image identified in the photographing range by the recognizing and identifying unit 12, as indicated as STEP S5 in FIG. 2. The presentation image generating unit 14 generates a presentation image in which the association information designated by the information designating unit 13 is superimposed on the image photographed by the photographing unit 11 at the position and orientation calculated by the information designating unit 13. In other words, the incorporation of the position and orientation information enables the presentation image generating unit 14 to generate a presentation image in which an information image or information texture is suitably processed and superimposed on the originally photographed image. This results in an enhancement in the information presenting effect.

If the platform has a large enough memory capacity, the following configuration may be adopted, although it is not shown in FIG. 1 or 3. That is, when the dataset 21 is to be input from the dataset server 30, the information server 40 carries out communications with the dataset server 30 so as to input in advance, or in other words to store, information (display contents) corresponding to the dataset server 30 into the storing unit 20 of the platform. This improves the operation efficiency of the information presenting device 10.

The application of the first embodiment to a camera cellular phone as a platform will now be explained. A cellular phone is basically a device used by an individual. Most of recent cellular phone models can obtain (download and install) application software programs from a cellular-phone accessible Internet website (hereinafter, referred to as "cell-phone website"). In principal, a cellular phone of this type is assumed to be adopted for the information presenting device 10. More specifically, an application software program for the information presenting device 10 is installed in the storing unit 20 of the cellular phone. Furthermore, the dataset 21 is provided from the dataset server 30 that is connected to a specific cell-phone website (not shown) by establishing communication therewith and stored in the storing unit 20 of the cellular phone as necessary. The following use of the information presenting device 10 on a cellular phone can be suggested. That is, photographs printed on a magazine or newspaper are designated as markers, and a dataset related thereto is prepared in advance. The user reads a marker on a page of a publication with the cellular phone, and obtains information related to this marker from a cell-phone website. Here, it is impossible to maintain every photograph, icon and illustration on every publication as reference data. Thus, from a realistic point of view, reference data should be limited to and offered for a specific use. In particular, information may be supplied to the user by grouping data as a "dataset for referring to photographs as markers on an issue of Month X" of a certain magazine. This improves the convenience for users, and a dataset containing a hundred to several hundreds of reference images can be sufficiently held in the storing unit 20 of a cellular phone and would take no longer than several seconds to conduct a recognizing and identifying process. In addition, it is not necessary to provide the photographs and illustrations of a publication used by the information presenting device 10 with any particular arrangement or processing. However, it is preferable that framing around pictures or a layout that enhances contrast with the background be provided in order to help the user recognize the data on the information presenting device 10.

According to the first embodiment of the present invention, the user can readily read multiple items of data of a field that the user desires to use, into the information presenting device 10 at a time, while on the dataset supplying side, it is easy to prepare. Commercial services that can be readily offered can also be realized.

When a position and orientation calculating function is added, the information obtained from the information server 40 can be displayed in an appropriate position and orientation. In other words, this results in a higher efficiency when the user is obtaining information.

### [Embodiment 2]

The second embodiment of the present invention will be explained next.

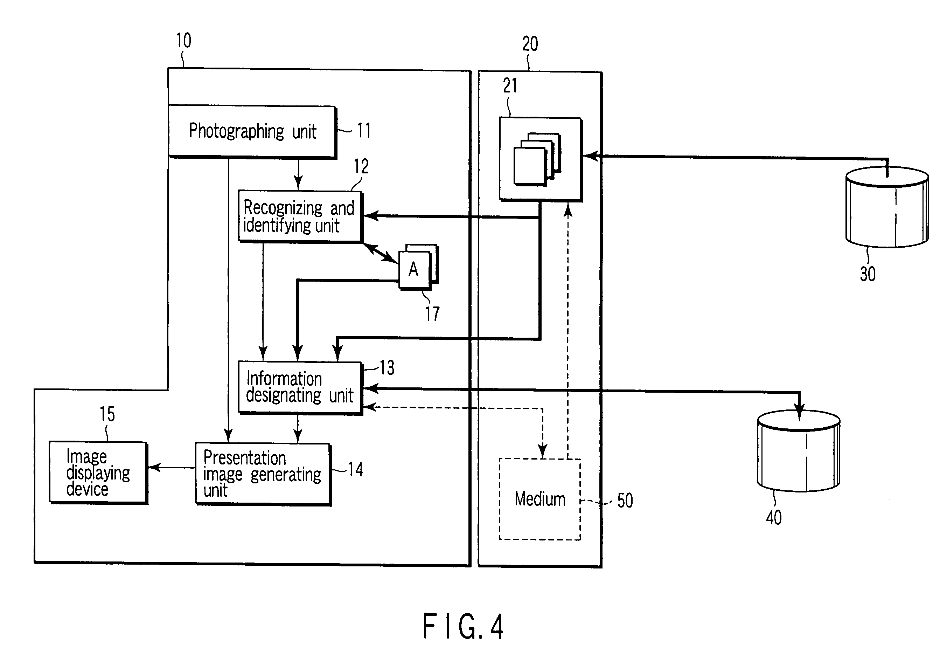

FIG. 4 is a diagram showing a structure of an information presenting system in which an information presenting device according to the second embodiment of the present invention is incorporated. The basic structure and operation of this information presenting system are the same as those of the first embodiment. The information presenting device 10 dealing with reference data by dataset increases the convenience for the user and actualizes the supply of the dataset.

However, under circumstances where the information presenting device 10 is widely used and a wide variety of datasets are offered from various business entities, the following configuration is suggested. That is, data of high utilization (hereinafter, referred to as basic data 17) for the users of the information presenting devices 10 should be placed to be always available regardless of any dataset 21 that is selected, instead of being individually supplied as a dataset 21. For instance, to achieve effective use, markers such as those associated with the index information of the dataset 21 itself and those most frequently used may be removed from the dataset 21, and these reference data markers may be placed to stay resident in the application software of the information presenting device 10. That is, according to the second embodiment, the dataset 21 is organized into sets in accordance with the purpose of use for the user or a publication or target object that is to be brought into correspondence, and supplied apart from the application software. For markers that are of high use or of great necessity, however, the reference data for these markers is placed to stay resident in the application software as basic data 17 or retained by the application software.

An example of a platform being a cellular phone will be considered again. For instance, for a practical use, a dataset 21 of a normal type is downloaded from a certain cell-phone website by establishing communication. It is, however, more convenient for the user of the cellular phone if the dataset 21 is given description and made searchable on an index site of the dataset 21 (a webpage on the cell-phone website). When making an access to this website itself, a marker specially for this purpose is read by the information presenting device 10 so that the information presenting device 10 supplies the URL for this website to a browser to achieve the access. Thus, there is no need to specially prepare a dataset 21. In other words, reference data corresponding to this marker is placed as basic data 17 in the application software. A particular illustration or logo may be adopted for the marker, or a plain square that is available anywhere may be defined as a marker.

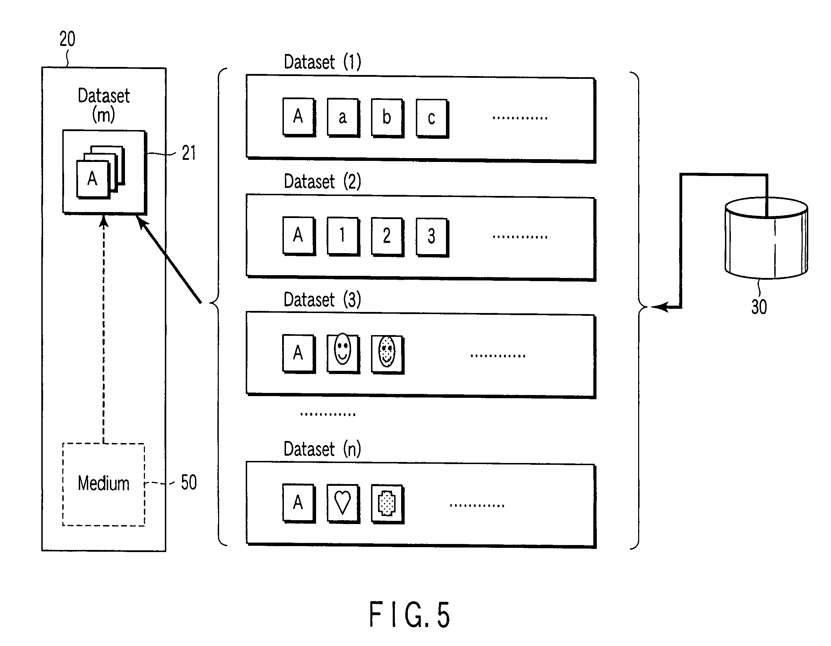

Alternatively, as illustrated in FIG. 5, instead of having the basic data 17 resident or retained in the application software, the dataset 21 that is to be supplied may be designed so that every dataset 21 always contains at least one identical data file which serves as the basic data 17 (template data "A" in the drawing).

In particular, when the information presenting device 10 is actually operated, the user downloads an arbitrary dataset 21, as described above. Because each of the dataset 21 includes at least one kind of basic data 17 mentioned above, the information presenting device 10 is always prepared to deal with any marker of high use or high necessity. For instance, as shown in FIG. 5, a situation in which multiple datasets 21 (datasets (1) to (n)) are present and one or more of the datasets 21 are loaded and stored into the storing unit 20 of the platform will be considered. Whichever dataset 21 is selected, the dataset 21 always contains one kind or more of basic data 17. For this reason, the user can carry out a basic operation by photographing a basic marker without giving any special attention thereto. As mentioned before, the basic operation includes an "access to an index page for the dataset", "access to support contact for the supplier of the information presenting device 10", "access to a weather report site" in a certain region, and any other operation that many users desire to perform. In other words, the basic operation is defined as an operation carried out with high frequency by users.

In addition, the information presenting device 10 may be configured to make a connection to the dataset server 30 upon and download basic data 17 every startup to incorporate the basic data 17 into other datasets 21 or to arrange it in such a manner as to refer to it together with other datasets 21.

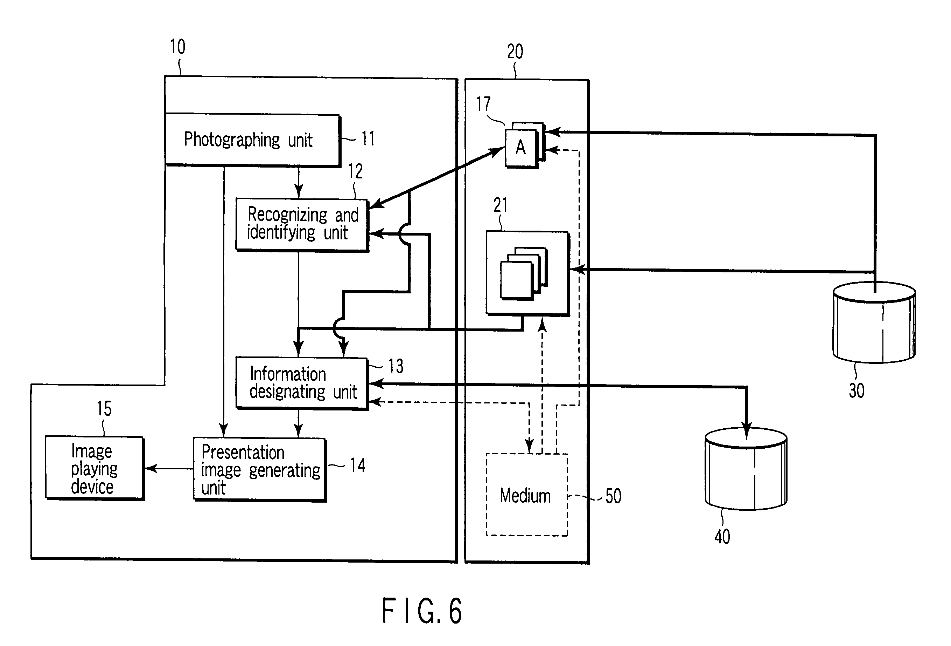

This structure offers a method of loading basic data 17 that is effective when the dataset 21 is externally supplied, especially when the dataset 21 is downloaded from the dataset server 30 via a network. In other words, when a dataset 21 is supplied to the information presenting device 10 via a network with the structure illustrated in FIG. 6, if the user selects a dataset 21 to download from the dataset server 30, the basic data 17 can be automatically downloaded together with the dataset 21 at the same time. Further, with the structure shown in FIG. 6, if the basic data 17 is already stored in the storing unit 20 of the platform in which the information presenting device 10 is arranged, the basic data 17 can be updated.

Hence, the user can use the basic data 17 on the information presenting device 10 at any time, without giving any special attention thereto.

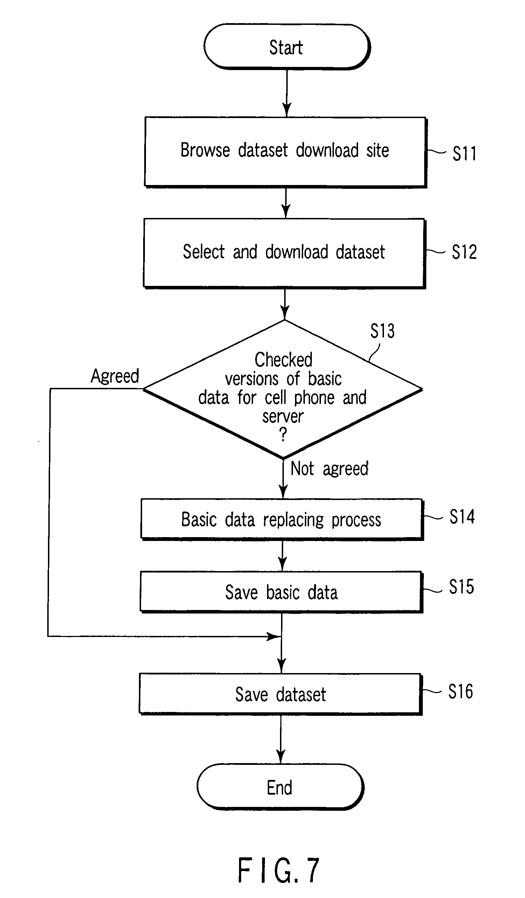

For instance, a cellular cameraphone of a type that can run application software has been widely used in recent years. A situation in which this type phone is adopted for a platform and application software having all the functions of the information presenting device 10 except for the photographing unit 11 and the image displaying device 15 are installed will be considered. Here, as shown in FIG. 7, when utilizing the application software, a certain dataset downloading site is browsed for the dataset 21 by establishing communication on the cellular phone (STEP S11). Next, initial downloading from the dataset server 30 is executed (STEP S12). Thereafter, the dataset server 30 determines whether or not the basic data 17 should be updated (STEP S13). More specifically, when there is no basic data 17 in the cellular phone, it is determined that an update should be made. Furthermore, even when there is the basic data 17 in the storing unit 20 of the cellular phone, the basic data 17 is in a version older than the version of the basic data 17 that is to be provided by the dataset server 30, it is determined that an update should be made. Then, the basic data 17 is downloaded in a similar manner to the dataset 21 (STEP S14). The downloaded basic data 17 is stored in the storing unit 20 of the cellular phone (STEP S15). The downloaded dataset 21 is also stored in the storing unit 20 of the cellular phone (STEP S16). In this manner, when the basic data 17 is already stored in the storing unit 20 of the cellular phone, the basic data 17 is downloaded and stored after determining the need for updating by comparing the versions.

As described above, the need for the dataset 21 is determined in accordance with the user's need, and only the dataset 21 such determined is stored in the cellular phone so that the high-speed marker identifying process is ensured, while the issue of the user's convenience would not arise.

The use of the information presenting device 10 includes an advanced information presenting technique, by using designs such as photographs and illustrations on a newspaper or magazine as markers and making an access from a cellular phone to the information related to or occurring from the markers, and by superimposing such information on an image photographed by a camera. In addition, not only publications but also objects and billboards on the street may be registered as markers. In such a case, when the cellular phone recognizes them as markers, additional information or updated information can be acquired.

As another use of the cellular phone, products having a rectangular package such as CDs and DVDs are given different designs for their jackets, and thus the jackets can be utilized as markers. For instance, a dataset for a group of target jackets may be distributed from a shop, or independently from a music company, to users so that the users can recognize each jacket as a maker on the cellular phone at a CD and/or DVD shop or at a rental store. For this purpose, the marker may be associated with a URL, by way of which information associated with the marker such as audio data of the introduction of a tune can be delivered to the cellular phone. Furthermore, an annotation for the jacket (individual remarks on a jacket picture) may also be suitably added as the association information.

In particular, the procedure described below should be followed in use of a cellular phone when the jacket design of a product having a rectangular package such as a CD and DVD is adopted for a maker. First, (1) at least part of a recording medium having music therein or its package appearance is distributed as marker data to cellular phones in advance. Then, (2) music information (such as audio data and annotation information) in association with the stored music is delivered to the cellular phone which has made an access to the address indicated by the marker.

This is effective in sales promoting for the music company. As for the music shop, it advantageously saves the shop from having to prepare for test-listening and the like.

In the above description, the recognizing and identifying unit, the information designating unit, the presentation image generating unit and the position and orientation calculating unit are assumed to be realized by the CPU of the information presenting device and programs executed on the CPU. Any configuration other than this may be adopted, however, such as providing a circuit intended for the purpose.

Moreover, the storing unit of the platform may be realized as an externally provided datapack or a detachable recording medium (such as a flash memory). However, the storing unit is not limited thereto.

The present invention has been explained according to the embodiments. The present invention, however, is not limited to the embodiments, and various modifications and applications can be conducted within the scope of the invention.

For example, a position and orientation calculating unit 16 can be provided in the second embodiment in a similar manner to the first embodiment so that the association information can be presented in accordance with the calculated position and orientation.

In addition, as indicated by dashed lines in FIGS. 1 and 3 to 6, an exchangeable memory medium 50 may be incorporated in place of the dataset server 30 and/or the information server 40. In this case, the dataset 21 and the basic data 17 being loaded into the storing unit 20 of the platform should be read as the data being unarchived from the memory medium 50 to the internal memory.

The present invention has been explained according to the first and second embodiments, but it should not be limited to these embodiments. Various modifications and application can be made within the scope of the invention.

### [Embodiment 3]

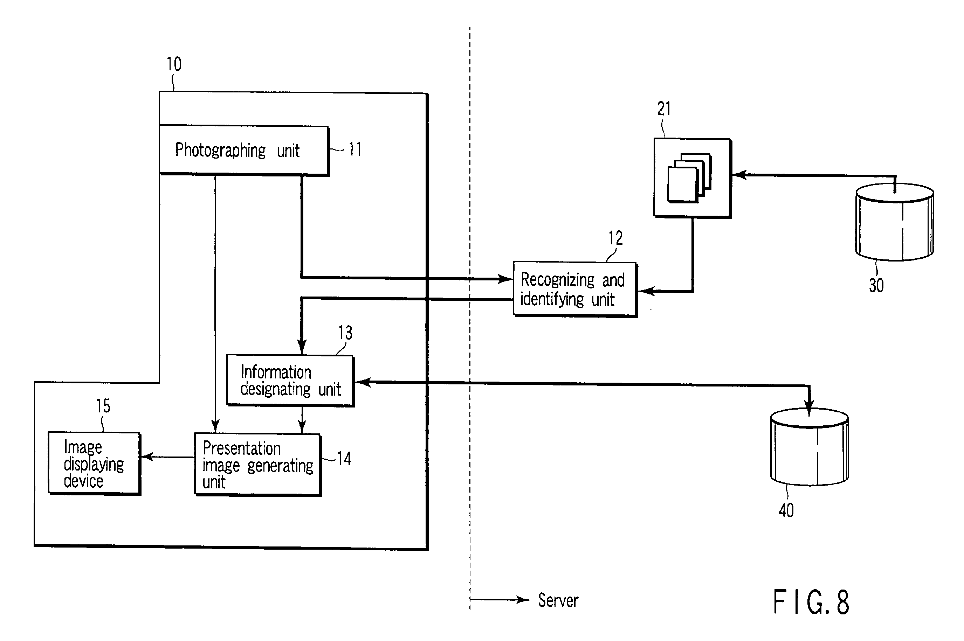

For instance, the structure of the information presenting system to which the information presenting device of the present invention according to the first embodiment as illustrated in FIG. 1 is applied may be modified as shown in FIG. 8. More specifically, the recognizing and identifying unit 12 arranged in the information presenting device 10 and the dataset 21 arranged in the storing unit 20 in the first embodiment may be provided on the server side, as indicated in FIG. 8. When the information presenting system is constituted in this manner, the memory medium 50 provided in the storing unit 20 is unnecessary and thus omitted from the structure.

## Claims

1. An information presenting device, **characterized by** comprising:
an identifying unit (12) for recognizing and identifying each marker within a photographing range of a photographing unit (11) from an image photographed by the photographing unit (11);
a designating unit (13) for designating information in accordance with information on the each marker identified by the identifying unit (12); and
a presentation image generating unit (14) for generating a presentation image in which the information designated by the designating unit (13) is associated with the image photographed by the photographing unit (11),
wherein the information on the each marker that is to be identified by the identifying unit (12) is supplied in a data file set (21) separately from the device (10).

2. The information presenting device according to claim 1, **characterized in that** the device retaining therein at least one group of basic data (17) with which the marker is recognized and identified and with which information to be displayed is specified.

3. The information presenting device according to claim 2, **characterized in that** when the marker is not recognized and identified with the basic data (17), the data file set (21) is supplied.

4. The information presenting device according to claim 2, **characterized in that** the data file set (21) is supplied in accordance with a result of recognizing and identifying the marker with the basic data (17).

5. The information presenting device according to claim 1, **characterized in that** the supplied data file set (21) always includes at least one data file that is also included in other data file sets (21).

6. The information presenting device according to claim 1, **characterized in that** a predetermined data file is always downloaded at startup of the information presenting device (10) by making a connection to a specific site so that the data file is installed into other data file sets of the information presenting device (10) or arranged in such a manner as to be referred to at a time.

7. The information presenting device according to any one of claims 1 to 6, **characterized in that** further comprising:
a position and orientation calculating unit (16) for calculating a position and orientation of the photographing unit (11) from an image of the each marker in the photographing range,
wherein the presentation image generating unit (14) generates the presentation image in which the information designated by the information designating unit (13) is presented in the position and orientation calculated by the position and orientation calculating unit (16) with respect to the image photographed by the photographing unit (11).

8. An information presenting terminal, comprising a photographing unit (11) having a predetermined photographing range, an information presenting device, a storing device (20), and a displaying unit (15),
**characterized in that** the information presenting device comprises:
an identifying unit (12) for recognizing and identifying each marker within a photographing range of a photographing unit (11) from an image photographed by the photographing unit (11);
a designating unit (13) for designating information in accordance with information on the each marker identified by the identifying unit (12); and
a presentation image generating unit (14) for generating a presentation image in which the information designated by the designating unit (13) is associated with the image photographed by the photographing unit (11), and displaying the presentation image on the displaying unit (15),
wherein reference information on the each marker that is to be identified by the identifying unit (12) is supplied from the storing device (20) in a data file set separately from the information presenting device.

9. The information presenting terminal according to claim 8, **characterized in that** the data file set (21) stored in the storing device (20) is downloaded from a specific site to which the information presenting terminal is accessible, in advance or at startup of the information presenting device.

10. The information presenting terminal according to claim 8, **characterized in that** the information presenting device includes therein at least one group of basic data (17) with which the marker is recognized and identified and with which information to be displayed is specified.

11. The information presenting terminal according to claim 10, **characterized in that,** when the marker is not recognized and identified with the basic data (17), the data file set (21) is supplied.

12. The information presenting terminal according to claim 10, **characterized in that** the data file set (21) is supplied in accordance with a result of recognizing and identifying the marker with the basic data (17).

13. The information presenting terminal according to claim 8, **characterized in that** the supplied data file set (21) always includes at least one data file that is also included in other data file sets (21).

14. The information presenting terminal according to claim 8, **characterized in that** a predetermined data file is always downloaded at startup of the information presenting device (10) by making a connection to a specific site so that the data file is installed into other data file sets of the information presenting device or arranged in such a manner as to be referred to at a time.

15. The information presenting terminal according to any one of claims 8 to 14, **characterized in that:**
the information presenting device further comprises a position and orientation calculating unit (16) for calculating a position and orientation of the photographing unit (11) from an image of the each marker in the photographing range,
wherein the presentation image generating unit (14) generates the presentation image in which the information designated by the information designating unit (13) is presented at the position and orientation calculated by the position and orientation calculating unit (16) with respect to the image photographed by the photographing unit (11).
